# DEMANDE DE BREVET EUROPEEN

(11) **EP 3 410 051 A1**
(43) Date de publication de la demande: **05.12.2018**
(21) Numéro de dépôt: 18175521.6
(22) Date de dépôt: 01.06.2018
(51) Int. Cl.: F26B 3/30, F26B 17/04

(54) **SYSTÈME ET PROCÉDÉ DE SÉCHAGE D'ARTICLES EN BOIS POUR L' INDUSTRIE AGRO-ALIMENTAIRE**

(30) Priorité: 02.06.2017 FR 1754952
(71) Demandeur: Smart Wood, 60320 Saint-Sauveur (FR)
(72) Inventeur: DEBACKER, Frédéric, 60200 Compiègne (FR); MORIN, Olivier, 75012 Paris (FR)
(74) Mandataire: Rataboul, Xavier

(57) **Abrégé**

La présente invention propose un système de séchage d'articles en bois pour l'industrie agro-alimentaire assurant la traçabilité des articles produits, efficace et économique.

À cette fin, il comprend :
• Au moins trois convoyeurs (10, 20, 30) agencés de manière à constituer un circuit fermé pour assurer une circulation cyclique de articles disposés sur ces convoyeurs, au moins deux des convoyeurs étant inclinés de manière à assurer, en utilisation, une chute des articles en passant d'un convoyeur à l'autre ;
• Un convoyeur de sortie (50), activable de manière sélective à une extrémité d'aval de l'un des convoyeurs du circuit fermé, de manière à permettre une sortie des articles hors du circuit fermé ;
• Une pluralité de vibreurs (70) agencés de manière à faire vibrer les convoyeurs (10, 20, 30) ;
• Des moyens de chauffage (60, 61) agencés au-dessus des convoyeurs (10, 20, 30) pour sécher les articles disposés sur les convoyeurs.

## Description

La présente invention se rapporte à un système et à un procédé de séchage d'articles en bois pour l'industrie agro-alimentaire, tels que des bâtonnets de glace, des fourchettes, des couteaux, des cuillères, des spatules pour agiter des boissons et des cure-dents. Par bois on entend le bois d'arbre, mais également les tiges de plantes telles que le bambou.

Ces articles sont de petite taille, c'est-à-dire de l'ordre de 5 à 20 cm de long, de 0,5 à 3 cm de large, et de 0,1 à 0,6 cm d'épaisseur, à plus ou moins 15% près.

Les articles en bois d'arbre sont obtenus par la découpe tangentielle de billes de bois en rotation pour obtenir le déroulage d'une feuille de bois d'épaisseur de quelques millimètres, comprise le plus souvent entre 0,1 et 0,6 cm. Cette feuille est alors découpée par des emporte-pièces de forme définie pour obtenir des ébauches des articles souhaités et qui devront subir des traitements, notamment un séchage, avant d'obtenir le produit fini.

Les articles en bambou sont généralement obtenus par la découpe longitudinale de portions de bambou pour obtenir des ébauches des articles souhaités et qui devront subir des traitements, notamment un séchage, avant d'obtenir le produit fini.

Actuellement, le séchage est réalisé dans de grands tambours rotatifs à vapeur munis d'une entrée des articles humides et d'une sortie des articles séchés. Entre l'entrée et la sortie, le tambour comprend des arrivées de vapeur et un guide en tôle en forme de vis d'Archimède pour forcer les articles à avancer vers la sortie.

Afin d'assurer la rentabilité du séchage de ces articles, ces tambours sont généralement de grande taille pour pouvoir sécher l'équivalent de la production d'ébauches de produits pendant une journée entière (12 heures). En outre, ces tambours sont alimentés en continu. Ainsi, dans un tambour se trouvent mélangées des ébauches d'articles issus de différents lots d'arbres ou de plantes.

Enfin, compte-tenu des impératifs humains, ces tambours de séchages sont mis en fonctionnement au cours de la journée de travail, de sorte qu'ils comprennent une partie (souvent la moitié) de la production de la veille et une partie (souvent la moitié) de la production du jour.

Il n'est donc actuellement pas possible d'assurer la traçabilité des articles, c'est-à-dire qu'il n'est pas possible de s'assurer que dans une boite de produits finis, tous les articles viennent d'un même lot d'arbres ou de plantes identifié.

Or, les exigences de qualités de productions demandent de pouvoir assurer la traçabilité des produits, c'est-à-dire de pouvoir déterminer de quel lot d'arbres ou de plantes tel ou tel article vient. C'est utile en cas de détection de défauts pour pouvoir retirer tous les articles venant d'un lot défectueux par exemple. Actuellement, en l'absence de cette traçabilité, c'est la production de deux jours (de la veille et du jour même) qui peut être amenée à être détruite alors qu'il aurait suffi de n'écarter que quelques boites d'articles venant d'un unique lot.

La présente invention vise donc à proposer un système de séchage assurant la traçabilité des articles produits.

Les tambours de l'état de la technique servent également au polissage et au paraffinage des articles. Ainsi, grâce à la rotation du tambour, les articles se frottent les uns contre les autres, ce qui permet le polissage des articles entre eux. Après un temps déterminé, de la paraffine solide ou liquide est introduite dans le tambour qui est ensuite remis en rotation pour assurer le paraffinage (enrobage complet de chaque produit par de la paraffine) de tous les produits présents dans le tambour.

Cependant, du fait de la grande quantité d'articles et de leur poids, l'agitation des articles par rotation du tambour complet génère une grande quantité de casse, et donc de pertes qui ne peuvent se voir qu'à la fin du cycle.

Outre la matière première perdue, cela génère également des pertes de paraffine puisque celle-ci est appliquées sur tous les produits dans le tambour, y compris les produits cassés.

La présente invention vise donc à proposer un système de séchage plus efficace pour limiter la casse et plus économique pour limiter les pertes de paraffine.

Enfin, ces tambours fonctionnant à la vapeur, un système de génération de vapeur doit être associé aux tambours. Ces systèmes consomment à la fois de l'énergie et de l'eau.

La présente invention vise donc à proposer un système de séchage plus économe, en particulier en eau.

À cette fin, l'invention a pour objet un système de séchage d'articles en bois pour l'industrie agro-alimentaire comprenant :
- au moins trois convoyeurs agencés de manière à constituer un circuit fermé de convoyeurs pour assurer, en utilisation, une circulation cyclique de articles disposés sur ces convoyeurs, au moins un des convoyeurs étant incliné de manière à assurer, en utilisation, une chute des articles en passant d'un convoyeur à l'autre ;
- un convoyeur dit « de sortie », activable de manière sélective à une extrémité d'aval de l'un des convoyeurs du circuit fermé, de manière à permettre, lorsqu'il est activé, une sortie des articles hors du circuit fermé ;
- Une pluralité de vibreurs agencés de manière à faire vibrer les convoyeurs dans une direction sensiblement perpendiculaire à une direction longitudinale des convoyeurs à goulotte rigide, avec une fréquence et une amplitude de vibration définie ;
- Des moyens de chauffage agencés au-dessus des convoyeurs du circuit fermé pour sécher, en utilisation, les articles disposés sur lesdits convoyeurs.

Selon des modes de réalisation particuliers :
- les vibreurs peuvent avoir une fréquence et une amplitude de vibration réglable ;
- les convoyeurs peuvent être choisi parmi les convoyeurs à bande, les convoyeurs à goulotte rigide et un mélange de ceux-ci ;
- le circuit fermé de convoyeurs peut comprendre :
   ∘ Un premier convoyeur à goulotte rigide et un deuxième convoyeur à goulotte rigide, inclinés de manière opposée présentant ainsi chacun, en position d'utilisation et par rapport au sens de déplacement des articles, une extrémité d'amont basse et une extrémité d'aval haute ;
   ∘ Un troisième convoyeur à bande agencé entre l'extrémité d'aval haute du premier convoyeur à goulotte rigide et l'extrémité d'amont basse du deuxième convoyeur à goulotte rigide ;
   ∘ Un quatrième convoyeur à bande agencé entre l'extrémité d'aval haute du deuxième convoyeur à goulotte rigide et l'extrémité d'amont basse du premier convoyeur à goulotte rigide ;
   les vibreurs étant agencés pour générer également une vibration dans une direction sensiblement parallèle à une direction longitudinale des convoyeurs à goulotte rigide, avec une fréquence et une amplitude de vibration définie ;
- le circuit fermé de convoyeurs peut comprendre :
   ∘ Un premier convoyeur à bande et un deuxième convoyeur à bande, inclinés de manière opposée présentant ainsi chacun, en position d'utilisation et par rapport au sens de déplacement des articles, une extrémité d'amont basse et une extrémité d'aval haute ;
   ∘ Un troisième convoyeur à bande agencé entre l'extrémité d'aval haute du premier convoyeur à bande et l'extrémité d'amont basse du deuxième convoyeur à bande ;
   ∘ Un quatrième convoyeur à bande agencé entre l'extrémité d'aval haute du deuxième convoyeur à bande et l'extrémité d'amont basse du premier convoyeur à bande ;
- les troisième et quatrième convoyeurs à bande peuvent être également inclinés de manière opposée, de telle sorte qu'au cours d'un cycle, chaque article chute quatre fois ;
- le système de séchage peut comprendre, en outre :
   ∘ un capteur d'humidité des articles disposés sur les convoyeurs ;
   ∘ une unité centrale reliée au capteur d'humidité et programmée :
      - pour comparer une valeur d'humidité transmise par le capteur d'humidité à une valeur seuil d'humidité ;
      - pour commander l'activation du convoyeur de sortie lorsque la valeur d'humidité transmise par le capteur d'humidité est inférieure ou égale à la valeur seuil d'humidité ;
- l'unité centrale peut être également reliée à un chronomètre et au moyen de chauffage, l'unité centrale étant programmée :
   ∘ pour chronométrer un temps de présence des articles sur le circuit fermé de convoyeurs ;
   ∘ pour commander le moyen de chauffage en fonction de la valeur d'humidité transmise par le capteur d'humidité et du temps de présence transmis par le chronomètre, afin de réguler une durée de séchage des articles ;
- l'unité centrale peut être également reliée aux vibreurs, l'unité centrale étant programmée pour commander la fréquence et/ou l'amplitude de vibration des vibreurs en fonction de la valeur d'humidité transmise par le capteur d'humidité ;
- les convoyeurs du circuit fermé peuvent être des convoyeurs à bande, l'unité centrale étant également reliée à des moteurs d'entrainement des convoyeurs à bande, et programmée pour commander une vitesse d'entrainement des convoyeurs à bande en fonction de la valeur d'humidité transmise par le capteur d'humidité ;
- le système de séchage peut comprendre, en outre un convoyeur d'alimentation agencé à une extrémité d'amont de l'un des convoyeurs du circuit fermé pour alimenter ledit circuit fermé en articles à sécher ;
- le moyen de chauffage peut comprendre une rampe de lampes Infra-Rouge ;
- le système de séchage peut comprendre, en outre, au moins un moyen d'aspiration d'air ambiant;
- le moyen d'aspiration peut être situé à côté et à proximité des convoyeurs ;
- les convoyeurs peuvent être des convoyeurs à bande dont les bandes sont ajourées et dans lequel le moyen d'aspiration est situé sous la bande des convoyeurs à bande par rapport aux articles ;
- les convoyeurs peuvent être des convoyeurs à bande dont les bandes sont ajourées et constituées d'un treillis métallique ;
- les convoyeurs peuvent être des convoyeurs à goulotte rigide ajourés et dans lequel le moyen d'aspiration est situé sous les convoyeurs à goulotte rigide par rapport aux articles ; et/ou
- les convoyeurs à goulotte rigide peuvent être constitués d'un treillis métallique.

L'invention a également pour objet un procédé de séchage d'articles en bois pour l'industrie agro-alimentaire avec un système de séchage précédent, comprenant les étapes suivantes :
A) agencer au moins trois convoyeurs de manière à constituer un circuit fermé de convoyeurs pour assurer, en utilisation, une circulation cyclique de articles disposés sur ces convoyeurs, au moins un des convoyeurs étant incliné de manière à assurer, en utilisation, une chute des articles en passant d'un convoyeur à l'autre ;
B) agencer un convoyeur dit « de sortie », activable de manière sélective, à une extrémité d'aval de l'un des convoyeurs du circuit fermé, de manière à permettre, lorsqu'il est activé, une sortie des articles hors du circuit fermé ;
C) agencer une pluralité de vibreurs de manière à faire vibrer, en utilisation, l'un au moins des convoyeurs selon une fréquence et une amplitude de vibration définie ;
D) agencer des moyens de chauffage au-dessus des convoyeurs pour sécher, en utilisation, les articles disposés sur les convoyeurs ;
E) Actionner les vibreurs et les convoyeurs du circuit fermé ;
F) Actionner le moyen de chauffage ;
G) Alimenter l'un des convoyeurs du circuit fermé de convoyeurs avec une quantité définie d'articles à sécher ;
H) Laisser tourner les articles à sécher sur le circuit fermé de convoyeurs selon un nombre de cycles suffisant pour que les articles atteignent un degré d'humidité seuil ;
J) Activer le convoyeur de sortie de manière à permettre une sortie des articles séchés hors du circuit fermé.

D'autres caractéristiques de l'invention seront énoncées dans la description détaillée ci-après, faite en référence aux dessins annexés, qui représentent, respectivement :
- les figures 1a et 1b, des vues schématiques en plan vue de dessus d'un premier mode de réalisation d'un système de séchage selon l'invention au cours du séchage et à la fin du séchage ;
- la figure 2, une vue schématique partielle en plan vue de côté du système de séchage selon l'invention de la figure 1a, illustrant un convoyeur à bande équipé de vibreurs et d'un moyen de chauffage ;
- les figures 3a et 3b, des vues schématiques en plan vue de dessus d'un deuxième mode de réalisation d'un système de séchage selon l'invention au cours du séchage et à la fin du séchage ;
- la figure 4, une vue schématique en plan vue de côté du système de séchage selon l'invention de la figure 3a ;
- la figure 5, une vue schématique en plan vue de côté du système de séchage selon l'invention de la figure 3b ;
- les figures 6a et 6b, des vues schématiques en plan vue de dessus d'un troisième mode de réalisation d'un système de séchage selon l'invention au cours du séchage et à la fin du séchage ;
- la figure 7, une vue schématique en plan vue de côté du système de séchage selon l'invention de la figure 6a ;
- la figure 8, une vue schématique en plan vue de côté du système de séchage selon l'invention de la figure 6b ;
- les figures 9a et 9b, des vues schématiques en plan vue de dessus d'un quatrième mode de réalisation d'un système de séchage selon l'invention au cours du séchage et à la fin du séchage ; et
- les figures 10a et 10b, des vues schématiques en plan vue de dessus d'une variante du mode de réalisation des figures 6a et 6b munie de déflecteurs ; et
- les figures 11a et 11b, des vues schématiques partielles en plan vue de dessus d'un cinquième mode de réalisation selon l'invention comprenant des convoyeurs en goulottes rigides et des convoyeurs à bande à sens d'entrainement réversible, au cours du séchage et à la fin du séchage.

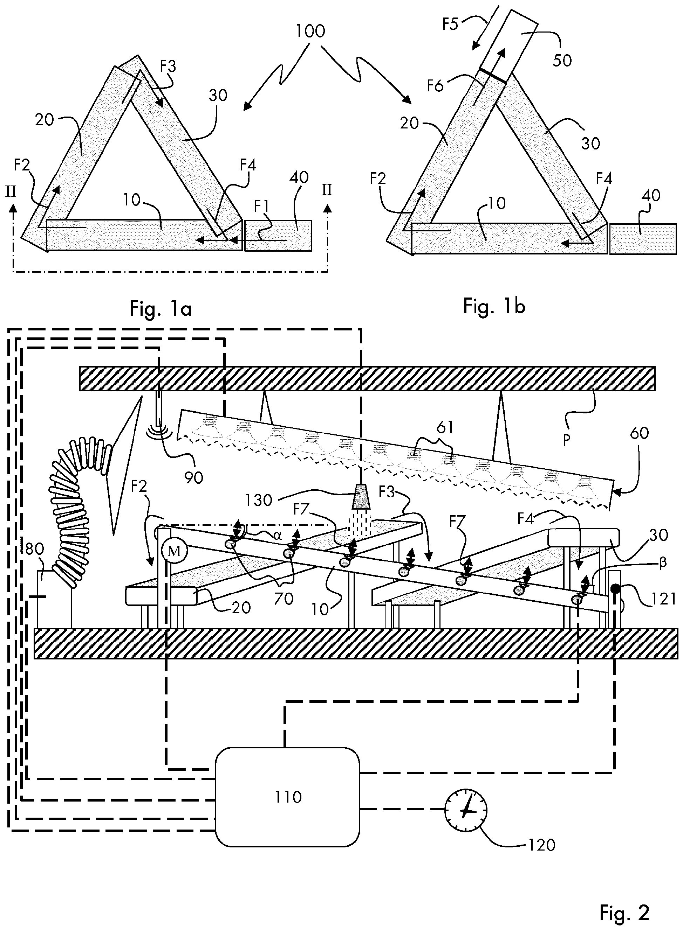

La figure 1 illustre un premier mode de réalisation d'un système de séchage 100 d'articles en bois pour l'industrie agro-alimentaire selon l'invention.

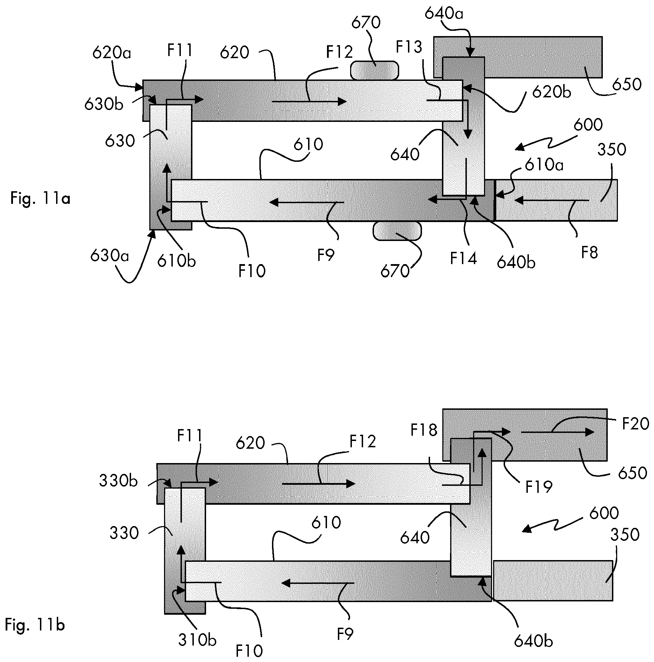

Ce système 100 comprend trois convoyeurs à bande 10, 20, 30 agencés de manière à constituer un circuit fermé de convoyeurs. Alternativement, ces convoyeurs peuvent êtres des convoyeurs en goulotte rigide, comme expliqué en relation avec la figure 11. Comme illustré par la suite, le nombre de convoyeur peut être supérieur, ce qui importe c'est de pouvoir assurer pendant une durée déterminée, une circulation en circuit fermé des articles à sécher. Ainsi, lorsque des produits sont disposés sur les convoyeurs du circuit fermé, ils circulent de manière cyclique.

L'alimentation en articles se fait avantageusement par un convoyeur à bande d'alimentation 40 selon la flèche F1 jusqu'à ce qu'une quantité définie d'articles soit apportée sur le convoyeur 10. Le convoyeur d'alimentation 40 est alors arrêté.

Pendant chaque cycle, les articles passent du convoyeur à bande 10 vers le convoyeur à bande 20 selon la flèche F2, puis vers le convoyeur à bande 30 selon la flèche F3.

Les articles retournent alors sur le convoyeur 10 selon la flèche F4.

Lorsque les articles sont secs (figure 1b), un convoyeur à bande dit « de sortie » 50 est activé. Dans ce mode de réalisation, pour être activé, le convoyeur à bande 50 est positionné dans le sens de la flèche F5 à une extrémité d'aval de l'un des convoyeurs à bande du circuit fermé, ici le convoyeur 20, pour interrompre le circuit fermé et permettre, lorsqu'il est activé, une sortie des articles hors du circuit fermé selon la flèche F6.

Le convoyeur de sortie 50 est avantageusement relié au reste du circuit de traitement pour finir la fabrication des articles.

Comme illustré en figure 2, un moyen de chauffage 60 est agencé au-dessus des convoyeurs à bande 10, 20 et 30 pour sécher les articles disposés sur les convoyeurs à bande. Dans le mode de réalisation illustré, le moyen de chauffage est constitué par une rampe de lampes infra-rouge 61 suspendue au plafond P.

Selon l'invention, au moins un des convoyeurs 10, 20 et 30 est incliné de manière à assurer, en utilisation, une chute (flèches F2, F3 et F4) des articles en passant d'un convoyeur à l'autre. Cette chute assure un mélange des articles qui frottent les uns contre les autres.

De préférence, les convoyeurs à bandes sont agencés pour que les articles chutent entre deux convoyeurs à bande consécutifs.

Cela permet à la fois une meilleure répartition de la chaleur émise par le moyen de chauffage 60, mais également un polissage des articles par friction entre eux.

Pour améliorer ces deux phénomènes (répartition de chaleur et polissage), l'invention prévoit une pluralité de vibreurs 70 agencés de manière à faire vibrer les bandes des convoyeurs à bande dans une direction F7 sensiblement perpendiculaire (l'angle β est sensiblement égal à 90°) à une direction longitudinale F9, F12 des convoyeurs, avec une fréquence et une amplitude de vibration définie. Cette vibration est transmise aux articles qui sautillent sur la bande. Ces mouvements permettent aux articles de frotter les uns contre les autres, permettant ainsi un polissage mutuel, et de pivoter et se retourner sur la bande, homogénéisant ainsi le séchage.

Avantageusement, les vibreurs 70 ont une fréquence et une amplitude de vibration réglable.

Le système comprend également avantageusement au moins un moyen d'aspiration d'air ambiant 80. Un tel système permet d'aspirer l'humidité dégagée par le séchage des articles par le moyen de chauffage, mais également d'aspirer la poussière générée par le frottement mutuel des articles lorsqu'ils circulent sur les convoyeurs à bande et qu'ils subissent chutes et vibrations.

Dans le mode de réalisation illustré en figure 2, le moyen d'aspiration 80 est situé à côté et à proximité des convoyeurs à bande 10, 20, 30.

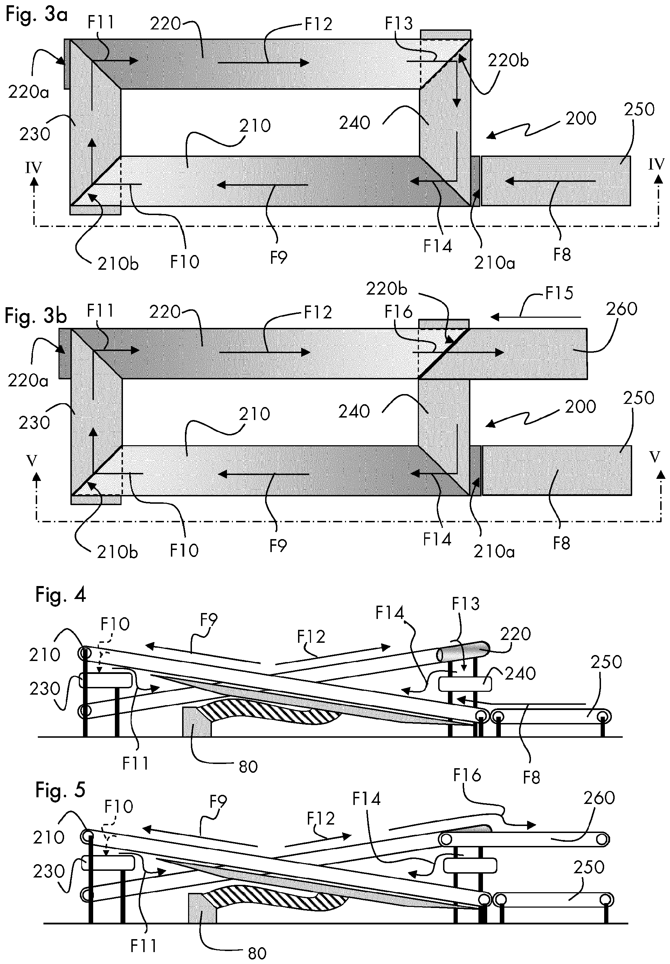

Alternativement ou en combinaison, comme illustré aux figures 4 et 5, le moyen d'aspiration 80 peut être situé sous la bande des convoyeurs à bande par rapport aux articles pour aspirer des poussières générées par le frottement mutuel des articles lorsqu'ils circulent sur les convoyeurs à bande.

Dans ce cas, les bandes des convoyeurs à bande sont avantageusement ajourées pour permettre le passage de l'air. Par exemple, les bandes sont constituées par un treillis métallique, de préférence en acier inoxydable.

De préférence, le système de séchage selon l'invention comprend au moins un capteur d'humidité 90 des articles disposés sur les convoyeurs à bande. Ce capteur est par exemple un capteur infra-rouge capable de donner des informations concernant le taux d'humidité des articles circulant sur les convoyeurs à bande.

Un opérateur peut ainsi mesurer le taux d'humidité des articles, et décider s'ils doivent continuer de circuler en circuit fermé sur les convoyeurs à bande 10, 20, 30 sous le ou les moyens de chauffage 60, ou si le convoyeur à bande de sortie 50 doit être activé pour évacuer les articles suffisamment secs.

Dans un mode de réalisation avantageux de l'invention, le système de séchage est pilotable automatiquement par une unité centrale 110.

L'unité centrale 110 est reliée au capteur d'humidité 90 et elle est programmée pour comparer une valeur d'humidité transmise par le capteur d'humidité 90 à une valeur seuil prédéterminée ou définie par l'opérateur en fonction des besoins.

Elle est également programmée pour commander l'activation du convoyeur à bande de sortie 50 lorsque la valeur d'humidité transmise par le capteur d'humidité 90 est inférieure ou égale à la valeur seuil.

L'activation du convoyeur à bande de sortie 50 est, selon la configuration du circuit fermé de convoyeurs à bande (nombre de convoyeurs, agencement) soit une simple mise en route, soit un déplacement en position d'utilisation suivi d'une mise en route.

Le séchage des articles en bois dépend notamment de la chaleur transmise par le moyen de chauffage, et de la durée d'exposition des articles à cette chaleur. Ainsi, par exemple, il peut être préférable (selon l'espèce de bois, les dimensions des articles ou leur type) d'appliquer une chaleur moyenne pendant une durée longue plutôt que d'appliquer une chaleur intense pendant une durée courte.

Avantageusement, l'unité centrale 110 est également reliée à un chronomètre 120 et au moyen de chauffage 60.

De préférence, le chronomètre 120 est relié à un capteur de présence 121 des articles sur le premier convoyeur à bande 10 pour démarrer le chronomètre dès que les articles arrivent sur le circuit fermé de convoyeurs à bande.

L'unité centrale 110 est alors programmée pour chronométrer le temps de présence des articles sur le circuit fermé de convoyeurs à bande et pour commander le moyen de chauffage 60 en fonction de la valeur d'humidité transmise par le capteur d'humidité 90 et du temps de présence transmis par le chronomètre 120, afin de réguler la durée de séchage des articles.

La commande du moyen de chauffage 60 se fait en augmentant ou diminuant sa puissance. Le moyen de chauffage est donc réglable dans ce cas.

En fonction du taux d'humidité des articles détecté par le capteur d'humidité 90, l'unité centrale 110 peut alors, par exemple, augmenter la puissance du moyen de chauffage 60 si la durée de séchage est trop longue.

Alternativement, ou en combinaison, l'unité centrale 110 peut être reliée aux moteurs M d'entrainement des convoyeurs à bande pour accélérer ou diminuer leur vitesse afin d'augmenter ou diminuer la durée d'un cycle de circulation, c'est à dire d'augmenter ou diminuer la durée nécessaire à un article pour parcourir tous les convoyeurs à bande 10, 20, 30.

Alternativement, ou en combinaison, l'unité centrale 110 peut également être reliée aux vibreurs 70. Dans ce cas l'unité centrale 110 est programmée pour commander la fréquence et/ou l'amplitude de vibration des vibreurs 70 en fonction de la valeur d'humidité transmise par le capteur d'humidité 90.

De cette manière l'unité centrale peut favoriser ou non l'homogénéisation de la chaleur autour de chaque article.

Avantageusement, le système de séchage selon l'invention comprend, en outre, des buses 130 de projection de paraffine solide ou liquide sur les articles disposés sur les convoyeurs à bande.

De préférence, l'unité centrale 110 est également reliée aux buses 130 de projection de paraffine, l'unité centrale 110 étant programmée pour commander la projection de paraffine en fonction de la valeur d'humidité transmise par le capteur d'humidité 90.

La variation des paramètres de chauffage, de vitesse des moteurs d'entrainement, de fréquence et/ou d'amplitude, d'aspiration d'air peut également varier en fonction du temps selon une courbe de programmée à l'avance. Par exemple, la puissance de chauffage peut être forte pendant une durée déterminée, puis plus faible, puis à nouveau forte. De même, la vitesse des convoyeurs à bande peut être moyenne au début, puis plus rapide vers la fin du traitement. Également, la fréquence et/ou l'amplitude de vibration peut/peuvent être faibles au début, puis plus élevées vers la fin du traitement lorsque les article sont plus sec et donc moins lourds.

Le système selon l'invention permet donc une grande polyvalence de traitement en fonction des articles, et donc des lots de matière première dont ils sont issus. Il est alors possible de traiter des lots aux propriétés très différentes pendant la journée, tout en assurant leur traçabilité.

Le moyen de chauffage, les capteurs et les vibreurs ne sont pas illustrés dans les figures 3a à 10b par souci de clarté.

Les figures 3a et 3b illustrent un deuxième mode de réalisation dans lequel le circuit fermé de convoyeurs à bande du système 200 comprend un premier 210 et un deuxième 220 convoyeurs à bande, inclinés de manière opposée (voir figures 4 et 5) présentant ainsi chacun, en position d'utilisation et par rapport au sens de déplacement des articles, une extrémité d'amont basse 210a-220a et une extrémité d'aval haute 210b-220b.

Ces deux convoyeurs à bande 210-220 sont reliés par :
- un troisième convoyeur à bande 230 agencé entre l'extrémité d'aval haute 210b du premier convoyeur à bande 210 et l'extrémité d'amont basse 220a du deuxième convoyeur à bande, et par
- un quatrième convoyeur à bande 240 agencé entre l'extrémité d'aval haute 220b du deuxième convoyeur à bande 220 et l'extrémité d'amont basse 210a du premier convoyeur à bande 210.

Le nombre et l'agencement des convoyeurs à bande d'un système de séchage selon l'invention sont choisis, notamment, en fonction de la place disponible dans l'usine de fabrication des articles.

Une configuration comme celle des figures 3a et 3b permet de limiter l'encombrement tout en optimisant la longueur de circulation des articles à sécher, par rapport à la configuration à trois convoyeurs de la figure 1.

Dans une variante non illustrée, les troisième 230 et quatrième 240 convoyeurs à bande peuvent également être inclinés de manière opposée, de telle sorte qu'au cours d'un cycle, chaque article chute quatre fois.

Le système de séchage 200 comprend également un convoyeur à bande d'alimentation 250 agencé à une extrémité d'amont basse de l'un des convoyeurs à bande du circuit fermé, ici le convoyeur 210, pour alimenter ledit circuit en articles à sécher selon le sens d'alimentation de la flèche F8.

À la figure 3a, le système est conformé pour l'entrée des articles dans le circuit fermé de convoyeurs à bande.

Les articles entrent selon la flèche F8 sur le convoyeur 210 puis circulent le long de ce convoyeur 210 selon la flèche F9.

Ils tombent sur le convoyeur 230 selon la flèche F10 (voir également figure 4), puis sur le convoyeur 220 selon la flèche F11. Ils circulent alors le long du convoyeur 220 selon la flèche F12. Ils tombent ensuite sur le convoyeur 240 selon la flèche F13, puis sur le convoyeur 210 selon la flèche F14 pour une recirculation.

On laisse alors tourner les articles à sécher sur le circuit fermé de convoyeurs à bande pendant un nombre de cycles suffisant pour que les articles atteignent un degré d'humidité seuil.

Lorsque ce dernier est atteint, il faut évacuer les articles secs hors du circuit pour poursuivre le procédé de fabrication.

La figure 3b illustre la configuration du système de séchage selon l'invention pour la sortie des articles.

Sur cette figure, un convoyeur à bande de sortie 260 est activé en le positionnant selon la flèche F15 en regard de l'extrémité d'aval haute 220b du convoyeur à bande 220, de telle sorte qu'il intercepte le flux d'articles et que ces derniers ne tombent pas sur le convoyeur à bande 240.

Bien entendu, l'activation du convoyeur de sortie comprend également sa mise en marche pour qu'il évacue les articles dans le sens de la flèche F16 hors du circuit fermé.

Dans le mode de réalisation illustré aux figures 3a à 5, l'extrémité d'aval de chaque convoyeur 210, 220, 230, 240 forme un angle (ici 45 degrés environ) avec les côtés de chaque convoyeur, permettant une bonne répartition des articles sur la largeur du convoyeur à bande suivant dans le circuit fermé.

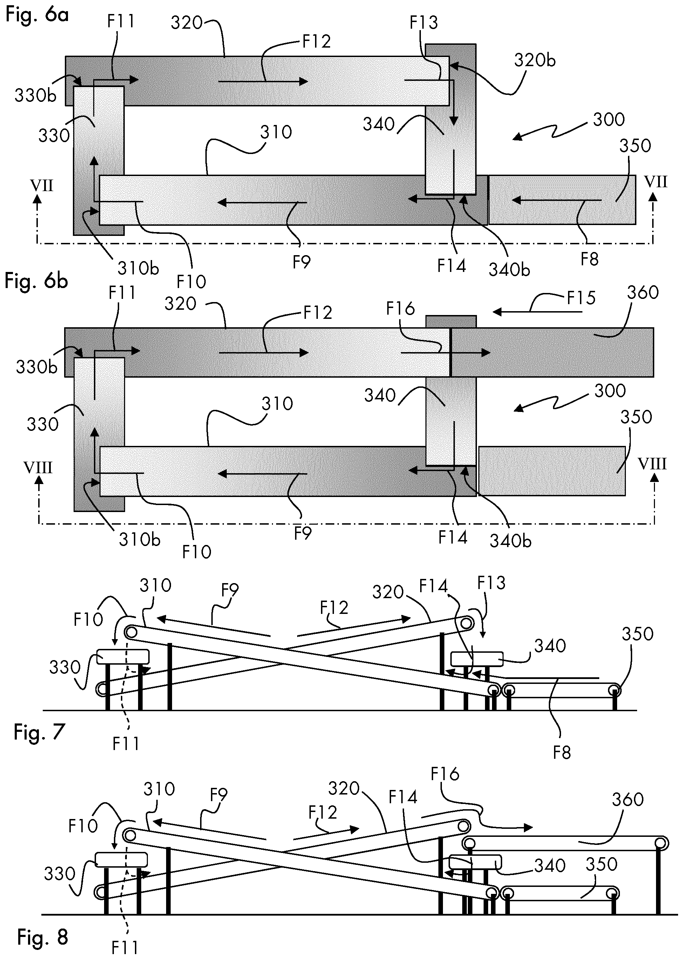

Dans le mode de réalisation illustré aux figures 6a à 8, l'extrémité d'aval 310b, 320b, 330b, 340b de chaque convoyeur 310, 320, 330, 340 du système 300 est perpendiculaire aux côtés de chaque convoyeur. De même, l'extrémité d'amont du convoyeur à bande de sortie 360 est perpendiculaire aux côtés dudit convoyeur. Le convoyeur d'alimentation 350 est identique à celui des modes de réalisation précédents.

Pour assurer la chute des articles d'un convoyeur à l'autre dans le sens des flèches F10, F11, F13 et F14, l'extrémité d'aval 310b, 320b, 330b, 340b de chaque convoyeur est disposée au-dessus et sensiblement au milieu du convoyeur suivant.

Pour la sortie des articles (figures 6b et 8), le convoyeur à bande de sortie 360 est activé en le positionnant selon la flèche F15 en regard de l'extrémité d'aval haute 320b du convoyeur à bande 320, de telle sorte qu'il intercepte le flux d'articles et que ces derniers ne tombent pas sur le convoyeur à bande 340.

Le reste du fonctionnement de ce mode de réalisation est similaire à celui illustré aux figures 3a à 5.

Si la répartition des articles sur le convoyeur à bande suivant dans le circuit fermé est plus linéaire qu'avec le mode de réalisation des figures 3a à 5, le mode de réalisation illustré aux figures 6a à 8 est moins complexe à mettre en oeuvre et moins coûteux. En outre, la vibration générée par les vibreurs 70 (non illustrés sur ces figures par souci de clarté) permet d'étaler au moins partiellement les articles.

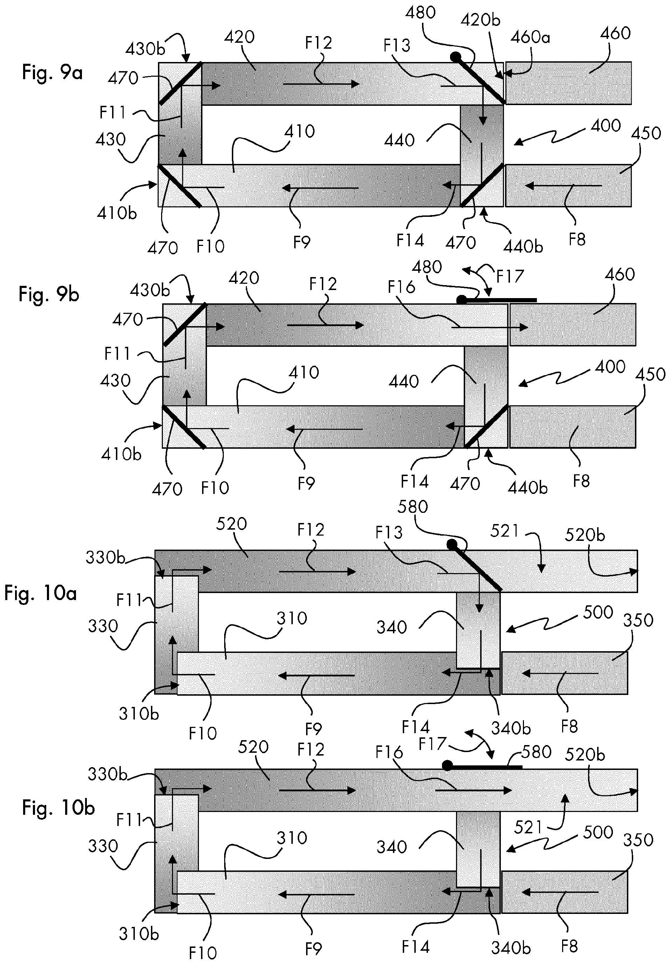

Un mode de réalisation alternatif est illustré aux figures 9a et 9b.

Dans ce mode de réalisation, le système de séchage 400 selon l'invention comprend quatre convoyeurs à bande 410, 420, 430, 440 pour le circuit fermé, un convoyeur d'alimentation 450 et un convoyeur de sortie 460 aux extrémités 410b, 420b, 430b, 440b, 450b, 460a perpendiculaires aux bords, comme dans le mode de réalisation précédent.

Dans le mode de réalisation des figures 9a et 9b, les extrémités d'aval 410b, 430b, 440b sont munie chacune d'un déflecteur 470 qui dévie le flux d'articles d'un convoyeur à l'autre.

L'extrémité d'aval 420b du convoyeur à bande 420 est munie d'un déflecteur 480 pivotant selon la flèche F17 entre deux positions d'utilisation : une première position, illustrée à la figure 9a, permettant de dévier le flux d'article depuis le convoyeur 420 vers le convoyeur 440 pour une recirculation des articles, et une deuxième position, illustrée à la figure 9b, parallèle au flux des articles, et permettant à ces derniers de rejoindre le convoyeur de sortie 460 selon la flèche F16.

Le mode de réalisation des figures 10a et 10b illustrent une variante de celui qui est illustré aux figures 6a et 6b. Les pièces identiques entre ces figures ont des références numériques identiques.

Ainsi, le système de séchage 500 comprend quatre convoyeurs à bande 310, 520, 330 et 340 agencés pour former un circuit fermé.

L'extrémité d'aval 310b, 330b, 340b de chaque convoyeur 310, 330, 340 est perpendiculaire aux côtés de chaque convoyeur.

Le deuxième convoyeur à bande 520 présente une longueur supérieure à celle du premier convoyeur à bande 310 et comprend, en regard du quatrième convoyeur à bande 340, un déflecteur 580 pivotant selon la flèche F17 entre deux positions d'utilisation : une première position, illustrée à la figure 10a, permettant de dévier le flux d'article depuis le convoyeur 520 vers le convoyeur 340 pour une recirculation des articles, et une deuxième position, illustrée à la figure 10b, parallèle au flux des articles, et permettant à ces derniers de rejoindre l'extrémité d'aval 520b du convoyeur 520 selon la flèche F16.

Ainsi, dans cette variante, la partie d'aval 521 du convoyeur 520 située entre le déflecteur pivotant 580 et l'extrémité d'aval 520b assure la fonction d'un convoyeur de sortie.

Cette partie 521, agencée vers l'extrémité d'aval du convoyeur 520, est activable de manière sélective grâce au déflecteur pivotant 580 de manière à permettre, lorsqu'elle est activée, une sortie des articles hors du circuit fermé.

Cette variante est également applicable au mode de réalisation illustré aux figures 9a et 9b.

Le reste du fonctionnement de ce mode de réalisation est similaire à celui illustré aux figures 3a à 5.

Les figures 11a et 11b illustrent un mode de réalisation particulièrement avantageux d'un système de séchage 600 selon l'invention.

Ce système comprend deux convoyeurs en goulotte rigide 610-620 et deux convoyeurs à bande 630-640 agencés de manière à constituer un circuit fermé de convoyeurs pour assurer, en utilisation, une circulation cyclique de articles disposés sur ces convoyeurs.

Les convoyeurs en goulotte rigide 610-620 sont inclinés de manière à assurer, en utilisation, une chute des articles en passant d'un convoyeur en goulotte rigide 610-620 à un convoyeur à bande 630-640.

Ainsi, le premier convoyeur en goulotte rigide 610 et le deuxième convoyeur en goulotte rigide 620 sont inclinés de manière opposée présentant ainsi chacun, en position d'utilisation et par rapport au sens de déplacement des articles, une extrémité d'amont basse 610a-620a et une extrémité d'aval haute 610b-620b.

Le troisième convoyeur à bande 630 est agencé entre l'extrémité d'aval haute 610b du premier convoyeur en goulotte rigide 610 et l'extrémité d'amont basse 620a du deuxième convoyeur en goulotte rigide 620.

De même, le quatrième convoyeur à bande 640 est agencé entre l'extrémité d'aval haute 620b du deuxième convoyeur en goulotte rigide 620 et l'extrémité d'amont basse 610a du premier convoyeur en goulotte rigide 610.

Dans un mode de réalisation non illustré, les convoyeurs à bande 630-640 peuvent également être inclinés de manière opposée de sorte que leur extrémité d'aval soit plus haute que leur extrémité d'amont, afin qu'au cours d'un cycle, chaque article chute quatre fois.

Cet agencement permet que l'installation prenne moins de place verticalement tout en assurant une chute des articles entre chaque convoyeur.

Dans ce mode de réalisation, le système comprend également un convoyeur de sortie 650 activable de manière sélective à une extrémité d'aval 640b de l'un des convoyeurs du circuit fermé, ici le convoyeur à bande 640, de manière à permettre, lorsqu'il est activé, une sortie des articles hors du circuit fermé.

Dans ce mode de réalisation, le convoyeur à bande 640 est un convoyeur à bande à sens d'entrainement réversible, c'est-à-dire que la bande peut être entraînée dans deux sens opposés. Par exemple, il comprend un moteur d'entrainement pouvant être commandé pour inverser le sens d'entrainement de la bande.

De cette manière, les articles peuvent être entrainés sélectivement soit vers le convoyeur à goulotte rigide 610 (sens des flèches F13 et F14), soit vers le convoyeur de sortie 650 (sens des flèches F18 et F19).

Comme dans les modes de réalisations précédents, un convoyeur d'alimentation 650 est agencé à une extrémité d'amont 610a de l'un 610 des convoyeurs du circuit fermé pour alimenter ledit circuit fermé en articles à sécher.

Selon l'invention, une pluralité de vibreurs 670 sont agencés de manière à faire vibrer les convoyeurs à goulotte rigide 610-620 selon une fréquence et une amplitude de vibration définie. De préférence, les vibreurs 670 ont une fréquence et une amplitude de vibration réglable.

Dans ce mode de réalisation, les vibreurs 670 sont agencés pour générer également une vibration dans une direction parallèle à la direction longitudinale des convoyeurs à goulotte rigide, direction représentée par les flèches F9 et F12.

Ainsi, la fréquence et l'amplitude de la vibration dans la direction F9-F12 (sensiblement parallèle à la direction longitudinale F9, F12 des convoyeurs à goulotte rigide) et de la vibration dans la direction F7 (sensiblement perpendiculaire à la direction longitudinale F9, F12) sont choisies pour que la vibration résultante fasse avancer les articles vers l'extrémité d'aval haute 610b-620b tout en étant retournés et secoués les uns contre les autres.

De tels vibreurs sont par exemple des moteurs associés à un ou plusieurs excentriques.

Les vibreurs 670 assurent donc, dans ce mode de réalisation à goulottes rigides, à la fois la fonction de vibration, mais également la fonction d'entrainement des articles le long des convoyeurs à goulotte rigide 610-620, et ce dans un sens inhabituel puisque les article remontent vers l'extrémité d'aval. Grâce à cette contrainte supplémentaire, les articles sont mélangés plus longtemps le long de chaque convoyeur à goulotte rigide 616-620 et chutent d'une hauteur relativement importante en passant sur les convoyeurs à bande 630-640 ce qui les mélange encore.

Comme dans les autres modes de réalisation précédemment décrits, des moyens de chauffage (non illustrés) sont agencés au-dessus des convoyeurs du circuit fermé, en particulier, dans ce mode de réalisation, au-dessus des convoyeurs à goulotte rigide 610-620, pour sécher les articles disposés sur lesdits convoyeurs.

Les convoyeurs à goulotte rigide comprennent généralement une tôle métallique rigide, de préférence en inox, avantageusement perforée, sur laquelle se déplacent les articles. Cette tôle résiste mieux aux moyens de chauffage que des bandes, fussent-elle en treillis métallique.

Un autre avantage réside dans la possibilité de relier la tôle directement à un ou plusieurs tuyaux d'aspiration souple(s) d'un moyen d'aspiration (non illustré), ce qui améliore sensiblement la qualité d'aspiration des poussières et de l'humidité ambiante.

La figure 11a illustre partiellement et de manière schématique et simplifiée un cinquième mode de réalisation au cours du séchage, c'est-à-dire lorsque les articles à sécher tourner dans le circuit fermé de convoyeurs 610-620-630-640.

Une quantité définie d'articles est introduite dans le circuit fermé par un convoyeur d'entrée 350 qui dépose les articles à l'extrémité d'amont 610a du convoyeur à goulotte rigide 610. Ce dernier est mis en vibration par des vibreurs 670 réglés de telle sorte que la vibration génère un mouvement général de translation (flèche F9) des articles vers le haut du convoyeur (l'extrémité d'aval 610b). Outre ce mouvement général de translation, chaque article subit également des retournements et des frottements contre les autres articles, ce qui permet à la fois un séchage rapide et un polissage efficace et doux (limitant fortement le risque de casse).

Arrivés à l'extrémité d'aval 610b du convoyeur 610, les articles chutent (flèche F10) sur le convoyeur à bande 630 qui les entraine vers l'extrémité d'amont 620a sur laquelle ils chutent encore (flèche F11).

Comme dans le convoyeur 610, les articles sont mis en translation générale (flèche F12) dans le deuxième convoyeur à goulotte rigide 620 vers l'extrémité d'aval 620b par les vibrations des vibreurs 670.

Là ils chutent sur le convoyeur à bande 640 (flèche F13) qui les entraine vers l'extrémité d'amont 610a du premier convoyeur à goulotte rigide 610 sur lequel ils chutent encore (flèche F14).

Puis la circulation des articles reprend tant que ces derniers ne sont pas secs, c'est-à-dire n'ont pas un degré d'humidité inférieure ou égale à une valeur seuil.

Lorsque ce degré d'humidité est atteint (de préférence il est mesuré par un capteur d'humidité 90), les articles sont considérés comme secs et peuvent sortir du système de séchage.

Cette sortie est illustrée à la figure 11b dans laquelle le sens d'entrainement du convoyeur à bande 640 est inversé.

Les articles présents ou tombant sur ce convoyeur 640 sont alors entrainés vers le convoyeur de sortie 650 (flèche F18) sur lequel ils tombent (flèche F19). Le convoyeur de sortie étant également activé, les articles sont entrainés par lui (flèche F20) vers le reste de l'installation pour la finition des articles.

Comme dans les autres modes de réalisations, le système de séchage 600 est automatisé. Ainsi, il peut avantageusement comprendre une unité centrale 110 reliée :
- à un capteur d'humidité 90 des articles disposés sur les convoyeurs ;
- aux moyens de chauffage; et/ou
- à un chronomètre 120 ; et/ou
- au moyen d'aspiration; et/ou
- aux vibreurs 670.

L'unité centrale 110 est alors programmée :
- pour comparer une valeur d'humidité transmise par le capteur d'humidité à une valeur seuil d'humidité ;
- pour commander l'activation du convoyeur de sortie 650 lorsque la valeur d'humidité transmise par le capteur d'humidité est inférieure ou égale à la valeur seuil d'humidité.

Dans le mode de réalisation des figures 11a et 11b, l'activation du convoyeur de sortie 650 consiste non seulement à actionner le convoyeur de sortie 650, mais également à inverser le sens d'entrainement du convoyeur 640 par rapport au sens d'entrainement lors du séchage des articles (figure 11a).

À cette fin, l'unité centrale est reliée également au moteur d'entrainement du convoyeur à bande 640, et programmée de manière à pouvoir actionner le convoyeur de sortie et inverser le sens d'entrainement du convoyeur à bande 640 si la valeur d'humidité transmise par le capteur est inférieure ou égale à la valeur seuil, de telle sorte que les articles quittent le convoyeur à goulotte rigide 620 en tombant sur le convoyeur à bande dont le sens d'entrainement a été inversé pour diriger les articles vers le convoyeur de sortie 650 (sens des flèches F18 et F19 ; voir figure 11b) qui les dirige vers le reste de l'installation pour la fin de la fabrication (sens de la flèche F20 ; voir figure 11b).

Comme dans les autres modes de réalisation, l'unité centrale 110 est également programmée :
- pour chronométrer un temps de présence des articles sur le circuit fermé de convoyeurs ;
- pour commander le moyen de chauffage en fonction de la valeur d'humidité transmise par le capteur d'humidité 90 et du temps de présence transmis par le chronomètre 120, afin de réguler une durée de séchage des articles ;
- pour commander les vibreurs 670 en modifiant la fréquence et/ou l'amplitude de vibration des vibreurs 670 en fonction de la valeur d'humidité transmise par le capteur d'humidité 90 pour commander une vitesse d'entrainement des convoyeurs à goulotte rigide.

Ainsi, l'invention propose un nouveau procédé de séchage d'articles en bois pour l'industrie agro-alimentaire comprenant les étapes suivantes :
A) agencer au moins trois convoyeurs de manière à constituer un circuit fermé de convoyeurs pour assurer, en utilisation, une circulation cyclique de articles disposés sur ces convoyeurs, au moins un des convoyeurs étant avantageusement incliné de manière à assurer, en utilisation, une chute des articles en passant d'un convoyeur à l'autre ;
B) agencer un convoyeur dit « de sortie », activable de manière sélective, à une extrémité d'aval de l'un des convoyeurs à bande du circuit fermé, de manière à permettre, lorsqu'il est activé, une sortie des articles hors du circuit fermé ;
C) agencer une pluralité de vibreurs de manière à faire vibrer, en utilisation, les convoyeurs selon une fréquence et une amplitude de vibration définie ;
D) agencer des moyens de chauffage au-dessus des convoyeurs pour sécher, en utilisation, les articles disposés sur les convoyeurs ;
E) Actionner les vibreurs et les convoyeurs du circuit fermé ;
F) Actionner le moyen de chauffage ;
G) Alimenter l'un des convoyeurs avec une quantité définie d'articles à sécher ;
H) Laisser circuler les articles à sécher sur le circuit fermé de convoyeurs selon un nombre de cycles suffisant pour que les articles atteignent un degré d'humidité seuil ;
J) Activer le convoyeur de sortie de manière à permettre une sortie des articles séchés hors du circuit fermé.

Avantageusement, le procédé comprend, entre l'étape H) et l'étape J), une étape I) d'activation de buses de projection de paraffine solide ou liquide sur les articles afin d'enrober de paraffine les articles secs.

Le fait de sécher les articles sur des convoyeurs limite l'épaisseur de la masse des articles, ce qui accélère le séchage. Cela limite également le poids supporté par les articles situés en dessous et la force des chocs subis par chaque article, ce qui réduit la quantité d'articles cassés et les pertes de matière première et de paraffine.

Selon des modes de réalisation non illustrés :
- Les bords des convoyeurs peuvent être munis de bavettes anti chute pour éviter que les articles ne tombent hors de ces derniers ;
- Pour améliorer l'étalement des articles sur la largeur des convoyeurs, notamment, mais non exclusivement, dans les modes de réalisation des figures 6a-6b et 10a-10b, il est possible de disposer au-dessus de chaque convoyeur un portique, de préférence muni d'une bande souple ou de chaines, agencé à une distance suffisante pour étaler les articles tout en les laissant passer une fois étalés ;
- Il est possible d'intercaler dans le circuit fermé de convoyeurs, un module de tri pour supprimer les articles cassés. Ce module comprend avantageusement des capteurs couplés à un analyseur d'image, lui-même couplé à des séparateurs mécaniques permettant d'écarter les articles cassés vers une sortie d'évacuation ;
- les convoyeurs peuvent être des convoyeurs à goulotte rigide ajourés et dans lequel le moyen d'aspiration est situé sous les convoyeurs à goulotte rigide par rapport aux articles ; et/ou
- les convoyeurs à goulotte rigide peuvent être constitués d'un treillis métallique.

## Revendications

1. Système de séchage (100, 200, 300, 400, 500, 600) d'articles en bois pour l'industrie agro-alimentaire **caractérisé en ce qu'**il comprend :
• au moins trois convoyeurs (10, 20, 30, 210, 220, 230, 240, 310, 320, 330, 340, 410, 420, 430, 440, 520, 610, 620, 630, 640) agencés de manière à constituer un circuit fermé de convoyeurs pour assurer, en utilisation, une circulation cyclique de articles disposés sur ces convoyeurs, au moins un des convoyeurs étant incliné de manière à assurer, en utilisation, une chute des articles en passant d'un convoyeur à l'autre ;
• un convoyeur dit « de sortie » (50, 260, 360, 460, 521, 650), activable de manière sélective à une extrémité d'aval (220b, 320b, 420b, 620b) de l'un des convoyeurs du circuit fermé, de manière à permettre, lorsqu'il est activé, une sortie des articles hors du circuit fermé ;
• Une pluralité de vibreurs (70, 670) agencés de manière à faire vibrer les convoyeurs (10, 20, 30, 210, 220, 230, 240, 310, 320, 330, 340, 410, 420, 430, 440, 520, 610, 620, 630, 640) dans une direction (F7) sensiblement perpendiculaire (β) à une direction longitudinale (F9, F12) des convoyeurs à goulotte rigide, avec une fréquence et une amplitude de vibration définie ;
• Des moyens de chauffage (60, 61) agencés au-dessus des convoyeurs du circuit fermé (10, 20, 30, 210, 220, 230, 240, 310, 320, 330, 340, 410, 420, 430, 440, 520, 610, 620, 630, 640) pour sécher, en utilisation, les articles disposés sur lesdits convoyeurs.

2. Système de séchage selon la revendication 1, dans lequel les vibreurs (70, 670) ont une fréquence et une amplitude de vibration réglable.

3. Système de séchage selon la revendication 1 ou 2, dans lequel les convoyeurs sont choisi parmi les convoyeurs à bande, les convoyeurs à goulotte rigide et un mélange de ceux-ci.

4. Système de séchage selon l'une quelconque des revendications 1 à 3, dans lequel le circuit fermé de convoyeurs comprend :
• Un premier convoyeur à goulotte rigide (610) et un deuxième convoyeur à goulotte rigide (620), inclinés de manière opposée présentant ainsi chacun, en position d'utilisation et par rapport au sens de déplacement des articles, une extrémité d'amont basse (610a, 620a) et une extrémité d'aval haute (610b, 620b) ;
• Un troisième convoyeur à bande (630) agencé entre l'extrémité d'aval haute (610b) du premier convoyeur à goulotte rigide (610) et l'extrémité d'amont basse (620a) du deuxième convoyeur à goulotte rigide (620) ;
• Un quatrième convoyeur à bande (640) agencé entre l'extrémité d'aval haute (620b) du deuxième convoyeur à goulotte rigide (620) et l'extrémité d'amont basse (610a) du premier convoyeur à goulotte rigide (610) ;
les vibreurs étant agencés pour générer également une vibration dans une direction sensiblement parallèle à une direction longitudinale (F9, F12) des convoyeurs à goulotte rigide, avec une fréquence et une amplitude de vibration définie.

5. Système de séchage selon l'une quelconque des revendications 1 à 3, dans lequel le circuit fermé de convoyeurs comprend :
• Un premier convoyeur à bande (210, 310, 410) et un deuxième convoyeur à bande (220, 320, 420, 520), inclinés de manière opposée présentant ainsi chacun, en position d'utilisation et par rapport au sens de déplacement des articles, une extrémité d'amont basse (210a, 220a) et une extrémité d'aval haute (210b, 220b, 310b, 320b, 410b, 420b, 520b) ;
• Un troisième convoyeur à bande (230, 330, 430) agencé entre l'extrémité d'aval haute (210b, 310b, 410b) du premier convoyeur à bande (210, 310, 410) et l'extrémité d'amont basse (220a) du deuxième convoyeur à bande (220, 320, 420, 520) ;
• Un quatrième convoyeur à bande (240, 340, 440) agencé entre l'extrémité d'aval haute (220b, 320b, 420b) du deuxième convoyeur à bande (220, 320, 420, 520) et l'extrémité d'amont basse (210a) du premier convoyeur à bande (210, 310, 410).

6. Système de séchage selon la revendication 4 ou 5, dans lequel les troisième et quatrième convoyeurs à bande (230, 240, 330, 340, 430, 440, 630, 640) sont également inclinés de manière opposée, de telle sorte qu'au cours d'un cycle, chaque article chute quatre fois.

7. Système de séchage selon l'une quelconque des revendications 1 à 6, comprenant, en outre :
• un capteur d'humidité (90) des articles disposés sur les convoyeurs ;
• une unité centrale (110) reliée au capteur d'humidité (90) et programmée :
∘ pour comparer une valeur d'humidité transmise par le capteur d'humidité (90) à une valeur seuil d'humidité ;
∘ pour commander l'activation du convoyeur de sortie (50, 260, 360, 460, 521, 650) lorsque la valeur d'humidité transmise par le capteur d'humidité (90) est inférieure ou égale à la valeur seuil d'humidité.

8. Système de séchage selon la revendication 7, dans lequel l'unité centrale (110) est également reliée à un chronomètre (120) et au moyen de chauffage (60-61), l'unité centrale (110) étant programmée :
• pour chronométrer un temps de présence des articles sur le circuit fermé de convoyeurs ;
• pour commander le moyen de chauffage (60-61) en fonction de la valeur d'humidité transmise par le capteur d'humidité (90) et du temps de présence transmis par le chronomètre (120), afin de réguler une durée de séchage des articles.

9. Système de séchage selon la revendication 7 ou 8, dans lequel l'unité centrale (110) est également reliée aux vibreurs (70, 670), l'unité centrale étant programmée pour commander la fréquence et/ou l'amplitude de vibration des vibreurs (70, 670) en fonction de la valeur d'humidité transmise par le capteur d'humidité (90).

10. Système de séchage selon la revendication 7 à 9, dans lequel les convoyeurs du circuit fermé sont des convoyeurs à bande, l'unité centrale (110) étant également reliée à des moteurs (M) d'entrainement des convoyeurs à bande (10, 20, 30, 210, 220, 230, 240, 310, 320, 330, 340, 410, 420, 430, 440, 520), et programmée pour commander une vitesse d'entrainement des convoyeurs à bande en fonction de la valeur d'humidité transmise par le capteur d'humidité (90).

11. Système de séchage selon l'une quelconque des revendications 1 à 10, comprenant, en outre un convoyeur d'alimentation (40, 250, 350, 450) agencé à une extrémité d'amont (210a, 610a) de l'un (210, 610) des convoyeurs du circuit fermé pour alimenter ledit circuit fermé en articles à sécher.

12. Système de séchage selon l'une quelconque des revendications 1 à 11, dans lequel le moyen de chauffage (60) comprend une rampe de lampes Infra-Rouge (61).

13. Système de séchage selon l'une quelconque des revendications 1 à 12, comprenant, en outre, au moins un moyen d'aspiration (80) d'air ambiant.

14. Système de séchage selon la revendication 13, dans lequel le moyen d'aspiration (80) est situé à côté et à proximité des convoyeurs (10, 20, 30, 210, 220, 230, 240, 310, 320, 330, 340, 410, 420, 430, 440, 520).

15. Système de séchage selon la revendication 13, dans lequel les convoyeurs sont des convoyeurs à bande (10, 20, 30, 210, 220, 230, 240, 310, 320, 330, 340, 410, 420, 430, 440, 520) dont les bandes sont ajourées et dans lequel le moyen d'aspiration (80) est situé sous la bande des convoyeurs à bande par rapport aux articles.

16. Système de séchage selon l'une quelconque des revendications 1 à 15, les convoyeurs sont des convoyeurs à bande (10, 20, 30, 210, 220, 230, 240, 310, 320, 330, 340, 410, 420, 430, 440, 520) dont les bandes sont ajourées et constituées d'un treillis métallique.

17. Système de séchage selon la revendication 13, dans lequel les convoyeurs sont des convoyeurs à goulotte rigide (610, 620) ajourés et dans lequel le moyen d'aspiration (80) est situé sous les convoyeurs à goulotte rigide par rapport aux articles.

18. Système de séchage selon la revendication 17, dans lequel les convoyeurs à goulotte rigide (610, 620) sont constitués d'un treillis métallique.

19. Procédé de séchage d'articles en bois pour l'industrie agro-alimentaire avec un système de séchage selon l'une quelconque des revendications 1 à 18, **caractérisé en ce qu'**il comprend les étapes suivantes :
A) agencer au moins trois convoyeurs (10, 20, 30, 210, 220, 230, 240, 310, 320, 330, 340, 410, 420, 430, 440, 520, 610, 620, 630, 640) de manière à constituer un circuit fermé de convoyeurs pour assurer, en utilisation, une circulation cyclique de articles disposés sur ces convoyeurs, au moins un des convoyeurs étant incliné de manière à assurer, en utilisation, une chute des articles en passant d'un convoyeur à l'autre ;
B) agencer un convoyeur dit «de sortie» (50, 260, 360, 460, 521, 650), activable de manière sélective, à une extrémité d'aval (220b, 320b, 420b, 640b) de l'un des convoyeurs du circuit fermé, de manière à permettre, lorsqu'il est activé, une sortie des articles hors du circuit fermé ;
C) agencer une pluralité de vibreurs (70, 670) de manière à faire vibrer, en utilisation, l'un au moins des convoyeurs selon une fréquence et une amplitude de vibration définie ;
D) agencer des moyens de chauffage (60-61) au-dessus des convoyeurs (10, 20, 30, 210, 220, 230, 240, 310, 320, 330, 340, 410, 420, 430, 440, 520, 610, 620, 630, 640) pour sécher, en utilisation, les articles disposés sur les convoyeurs ;
E) Actionner les vibreurs (70, 670) et les convoyeurs (10, 20, 30, 210, 220, 230, 240, 310, 320, 330, 340, 410, 420, 430, 440, 520, 610, 620, 630, 640) du circuit fermé ;
F) Actionner le moyen de chauffage (60-61) ;
G) Alimenter l'un des convoyeurs (10, 210, 310, 410, 610) du circuit fermé de convoyeurs avec une quantité définie d'articles à sécher;
H) Laisser tourner les articles à sécher sur le circuit fermé de convoyeurs selon un nombre de cycles suffisant pour que les articles atteignent un degré d'humidité seuil ;
J) Activer le convoyeur de sortie (50, 260, 360, 460, 521, 650) de manière à permettre une sortie des articles séchés hors du circuit fermé.
